# EUROPÄISCHE PATENTSCHRIFT

(11) **EP 2 067 754 B1**
(45) Veröffentlichungstag und Bekanntmachung des Hinweises auf die Patenterteilung: **27.04.2016**
(21) Anmeldenummer: 08020821.8
(22) Anmeldetag: 01.12.2008
(51) Int. Cl.: C04B 35/645, C04B 35/626, C04B 35/44, C04B 35/115, C04B 35/581, C04B 35/443

(54) **VERFAHREN ZUR HERSTELLUNG EINER POLYKRISTALLINEN TRANSPARENTEN KERMAIK DURCH ZYKLISCHES PRESSEN**
METHOD FOR PRODUCING A POLYCRYSTALLINE TRANSPARENTE CERAMIC BY CYCLIC PRESSING
PROCÉDÉ DE FABRICATION D'UNE CÉRAMIQUE TRANSPARENTE POLYCRISTALLINE PAR COMPRESSION CYCLIQUE

(30) Priorität: 07.12.2007 DE 102007059091
(43) Veröffentlichungstag der Anmeldung: 10.06.2009
(60) Teilanmeldung: 12191075.6
(73) Patentinhaber: CeramTec-Etec GmbH, 53797 Lohmar (DE)
(72) Erfinder: Schnetter, Lars, 53518 Wimbach (DE)
(74) Vertreter: Uppena, Franz

(56) Entgegenhaltungen:
- EP-A1- 0 463 369
- EP-A2- 1 557 402
- CN-A- 1 887 786
- MATSUA Y ET AL: "DEVELOPMENT OF CYCLIC-CIP AND ITS APPLICATION TO POWDER FORMING", CHEMICAL ABSTRACTS, CHEMICAL ABSTRACTS SERVICE (C A S), US, Bd. 108, Nr. 6, 1. Februar 1988 (1988-02-01), Seite 317, XP000016741, ISSN: 0009-2258
- KIM K T ET AL: "CYCLIC COMPACTION OF CERAMIC POWDERS", JOURNAL OF THE AMERICAN CERAMIC SOCIETY, BLACKWELL PUBLISHING, MALDEN, MA, US, Bd. 75, Nr. 11, 1. November 1992 (1992-11-01), Seiten 3157-3159, XP000334999, ISSN: 0002-7820, DOI: DOI:10.1111/J.1151-2916.1992.TB04405.X
- GALLAS M R ET AL: "FABRICATION OF TRANSPARENT GAMMA-AL2O3 FROM NANOSIZE PARTICLES", JOURNAL OF THE AMERICAN CERAMIC SOCIETY, BLACKWELL PUBLISHING, MALDEN, MA, US, vol. 77, no. 8, 1 August 1994 (1994-08-01) , pages 2107-2112, XP000464152, ISSN: 0002-7820, DOI: 10.1111/J.1151-2916.1994.TB07104.X
- MICHAELI N ET AL: "CYCLING PRESSURE DURING COLD ISOSTATIC PRESSING", CERAMIC PROCESSING SCIENCE AND TECHNOLOGY : [PROCEEDINGS OF THE FIFTH INTERNATIONAL CONFERENCE ON CERAMIC PROCESSING SCIENCE AND TECHNOLOGY, HELD IN FRIEDRICHSHAFEN, GERMANY, SEPTEMBER 11 - 14, 1994]; [CERAMIC TRANSACTIONS], WESTERVILLE, OHIO : AMERI, vol. 51, 1 January 1995 (1995-01-01), pages 277-281, XP008150993, ISBN: 0-944904-89-0

## Beschreibung

Die Erfindung betrifft ein Verfahren zur Herstellung einer polykristallinen transparenten Keramik, die für Licht einer Wellenlänge zwischen 600 und 650 nm eine wahre In-Line-Transmission (RIT) von >40 % des theoretischen Maximalwertes aufweist.

Um Fahrzeuge, insbesondere Militärfahrzeuge - aber auch Zivilfahrzeuge - vor einem Beschuss zu schützen, werden sie gepanzert. Die Panzerung erfolgt üblicherweise mittels eines Metallsystemes oder mittels eines MetallKeramik-Systemes. Eine solche Panzerung ist jedoch nicht für Fenster enthaltende Bereiche, d.h. für die Seitenscheiben, die Frontscheibe usw. geeignet. Diese zuletzt genannten Bereiche eines Fahrzeuges werden üblicherweise durch Panzerglas geschützt. Panzerglas besitzt jedoch eine relativ geringe ballistische Effizient, insbesondere gegenüber Hartkernmunition, so dass die Fensterbereiche die Schwachstellen eines entsprechenden Fahrzeugs darstellen. Außerdem besitzt Panzerglas ein großes Gewicht, um einen ausreichenden Schutz zu gewährleisten.

Keramikmaterial besitzt ein wesentlich besseres Schutzverhalten.

Aus diesem Grunde wurde bereits nach Alternativen zum Panzerglas gesucht. Diese Alternativen wurden im Wesentlichen in Spinellen (MgAl₂O₄ usw.) und in AION gefunden. Infolge der sehr hohen notwendigen Prozesstemperaturen, sind diese Materialien jedoch grobkristallin mit Korngrößen von deutlich > 1µm, sogar deutlich > 10µm und mehr. Aus diesen großen Korngrößen resultieren relativ geringe mechanische Kennwerte, d.h. eine geringe Härte und Festigkeit im Vergleich zu submikronkristallinen Materialien.

Seit jüngerer Zeit ist bekannt, dass bei Keramiken mit Korngrößen <1µm bei doppelbrechenden Materialien die Transparenz zunimmt, so dass kleinste Korngrößen zwingend notwendig sind. Mit abnehmender Korngröße nehmen außerdem die Festigkeit und Härte bei solchen Keramiken mit einer Korngröße <1µm deutlich zu.

Aus der Erkenntnis des Zusammenhangs zwischen den mechanischen Kennwerten, wie Härte und Festigkeit, und der Korngröße, sowie bei allen doppelbrechenden Materialien, dem Zusammenhang zwischen Transparenz und Korngröße, ergibt sich der Wunsch nach der Herstellung eines transparenten submikronkristallinen Materials. Ein derartiges transparentes submikronkristallines Material ist z.B. in der EP1 557 402 A2 beschrieben. Dabei erfolgt die Herstellung des transparenten submikronkristallinen Materials ausschließlich über nasse Formgebungsverfahren, wie z.B. Gel-Casting, Slip-Casting, Pressure-Casting, oder eine elektrophoretische Abscheidung.

Alle diese bekannten Formgebungsverfahren weisen jedoch den Mangel auf, dass sie eine aufwendige Trocknung und/oder Entbinderung benötigen. Ein weiterer Mangel besteht in der nur bedingten Oberflächengüte, so dass stets eine aufwendige Oberflächennachbehandlung erforderlich ist.

Aus diesem Grunde ergibt sich der Wunsch nach einer vergleichsweise unkomplizierten wirtschaftlichen Herstellungsmöglichkeit von submikronkristallinen transparenten Keramiken. Bezüglich der erwünschten Wirtschaftlichkeit bieten sich vor allem Pressverfahren an; mit solchen Preßverfahren konnten jedoch bislang keine Keramiken mit akzeptablen optischen und mechanischen Kennwerten realisiert werden.

Die WO 03/057065 A1 offenbart zwar eine transluzente Aluminiumoxidkeramik mit einer mittleren Korngröße von ≤1µm, bzw. mit Korngrößen um 0,8-0,9µm. Diese bekannte transluzente Keramik wird jedoch den Ansprüchen nach Transparenz - mit Korngrößen um 0,5µm - nicht gerecht. Das liegt vor Allem daran, dass die relativ hohe Dichte durch ein relativ starkes Kornwachstum erkauft werden muß. Die Ursache hierfür liegt vor allem in der relativ geringen Sinterfähigkeit des Grünkörpers, die im Wesentlichen durch die Porenverteilung und das Porenvolumen bestimmt wird. Beides ist bei der herkömmlichen Pressformgebung schlechter als bei den nassen Formgebungsverfahren - insbesondere gilt dies für die Porenverteilung -.

CN 1 887 786 A offenbart ein Verfahren zur Herstellung eines kristallinen Al₂O₃ -Materials, das für Licht einer Wellenlänge von 600 nm eine RIT von 60% des theoretischen Maximalwertes aufweist. Das Verfahren enthält folgende Schritte: Vorbereitung eines Keramikgranulats durch Sprühgranulation, trockenes Pressen bei 50 MPa, kaltes isostatisches Pressen bei 200 MPa, Vorsinterung zwischen 200 und 1300°C, Hippen in Argonatmosphäre bei 200 MPa und 1200°C. PVA wird als Binder benutzt und beim Vorsintern weggebrannt. Das hergestellte Produkt besitzt eine Korngröße von 0,5 µm, eine Dichte von 99,96% der TD, eine RIT(600 nm) von 62%.
"Development of Cyclic-CIP and its Application to Powder Forming" (Matsua et al., CHEMICAL ABSTRACTS, Nr. 6, Februar 1988, Seite 317) beschreibt zyklisches Pressen von Al₂O₃-Pulvern, um die Gründichte zu erhöhen und niedrigere Pressdrücke zu verwenden, aber offenbart nur ein zyklisches, isostatisches Pressen.

Somit existiert bislang keine Möglichkeit, ein submikronkristallines transparentes Keramikmaterial auf wirtschaftlichem Wege herzustellen.

Der Erfindung liegt deshalb die Aufgabe zugrunde, ein Verfahren der eingangs genannten Art zu schaffen, mit welchem ein submikronkristallines transparentes Keramikmaterial auf wirtschaftliche Weise herstellbar ist.

Diese Aufgabe wird erfindungsgemäß durch die Merkmale des Anspruches 1 gelöst. Bevorzugte Aus- bzw. Weiterbildungen des erfindungsgemäßen Verfahrens sind in den Unteransprüchen gekennzeichnet.

Die Erfindung basiert also auf einer Technologie zur Herstellung einer polykristallinen transparenten Keramik durch Pressformgebung. Die Transparenz ist verbunden mit Werten von RIT > 40% (am Beispiel von Al₂O₃). Das ist bei Al₂O₃ nur möglich bei Porositätsgraden <0,05% sowie Korngrößen ≤800nm, vorzugsweise < 600nm.

Die geringen Korngrößen sind für kubische Systeme hinsichtlich der Transparenz nicht zwingend notwendig, jedoch für die gewünschten mechanischen Eigenschaften - vor allem Härte und Festigkeit - notwendig. Das erfindungsgemäß hergestellte Keramikmaterial ist besonders zur Realisierung von transparentem ballistischem Schutz von Fahrzeugen, insbesondere zur Herstellung von Fahrzeugfenstern oder zur Herstellung von Infrarot-Radarkuppen geeignet, ohne hierauf beschränkt zu sein.

Da das erfindungsgemäße Verfahren eine Presstechnologie ausnutzt, ist es besonders wirtschaftlich durchführbar.

Das erfindungsgemäße Verfahren zur Herstellung submikronkristalliner transparenter Keramiken ist deshalb vorteilhaft, weil über die wirtschaftliche Presstechnologie Eigenschaften bezüglich Transparenz und mechanischer Kennwerte, wie Härte und Festigkeit, erzielt werden, die bislang nur mittels einer nassen Formgebung, wie sie in der eingangs zitierten EP 1 557 402 A2 beschrieben ist, möglich sind. Die erfindungsgemäß zur Anwendung gelangende Presstechnologie ist außerdem unter dem Gesichtspunkt vorteilhaft, dass auch relativ große Bauteile mit Flächenabmessungen von > 200mm x 200mm hergestellt werden können.

Erfindungsgemäß wird das Keramikgranulat durch zyklisches Pressen verdichtet. Bei diesem zyklischen Pressen kann es sich um ein uniaxiales Pressen oder um eine Kombination aus uniaxialem Pressen und isostatischem Pressen handeln.

Die Besonderheit liegt erfindungsgemäß in der Anpassung des zyklischen Pressens auf Submikronkeramiken, die - wie sich in überraschender Weise gezeigt hat - besonders auf dieses Verfahren anzusprechen scheinen. Bei diesen Submikronkeramiken sind durch das zyklische Pressen höchste Verdichtungen - ohne Pressdrücke von ≥ 500 MPa anzuwenden - möglich. D.h. nur durch den erfindungsgemäß beobachteten Effekt werden die erwünschten Eigenschaften bezüglich Transparenz und den gewünschten mechanischen Eigenschaften möglich.

Die durch das erfindungsgemäße zyklische Pressen erlangten Gründichten entsprechen bei einer passenden Anzahl von Presszyklen Pressdrücken von deutlich >1000 MPa. Erfindungsgemäß können also deutlich höhere Gründichten erzielt werden, als unter bekannten normalen Umständen möglich wären. Außerdem ist es möglich, die Porenverteilung in vorteilhafter Weise zu reduzieren und somit die Homogenität des hergestellten Keramikmaterials zu erhöhen; insbesondere die größten Poren verschwinden.

Das verpresste Keramikmaterial wird anschließend entweder vorgesintert und sintergehippt oder bis zum Auftreten von geschlossener Porosität gesintert und anschließend nachgehippt.

Im Hip-Prozess liegt eine weitere Besonderheit der vorliegenden Erfindung: Das Material wird bspw. in einer widerstandsbeheizten Kanthal-Hippe, bevorzugt unter Luft, - oder in einer Argonatmosphäre oder im Vakuum - gehippt. Durch den Verzicht auf Kohlenstoff-Heizelemente wird verhindert, dass oft berichtete Kohlenstoffverunreinigungen bzw. Reduktionserscheinungen auftreten können. Das ist jedoch nur möglich, wenn die Hip-Temperatur unterhalb von 1240°C, besser unter 1200°C, liegt. Die geringen Hip-Temperaturen bedingen in vorteilhafter Weise wiederum eine geringe Vorsintertemperatur, so dass zum Hippen ausreichend Sinteraktivität vorhanden bleibt. Die Absenkung der Gesamttemperatur ist nur durch entsprechende Grünkörper - wie erwähnt - möglich.

Die Erfindung umfasst jedoch auch andere Hip-Varianten, wie Molybdän- oder Kohlenstoff-Hippen; hinsichtlich erhöhter Transparenzgrade ist jedoch besonders die Verwendung der erwähnten Kanthal-Hippe bevorzugt.

Zur abschließenden Präparation können erfindungsgemäß hergestellte Bauteile poliert werden, so dass sich RIT-Werte >40% ergeben.

Die Bauteile-Geometrien sind erfindungsgemäß nur durch die Möglichkeiten der üblichen Grünbearbeitung wie bspw. CNC-Fräsen, Schneiden, Drehen, usw. der Bauteile begrenzt.

Die für die Transparenz der erfindungsgemäß hergestellten Bauteile verantwortliche Größe ist die zwecks Ausschluss von Streulicht aus der erfassten Intensität nur mit sehr engem Aperturwinkel von ca. 0,5 DEG zu messende "wahre" (real) In-Line-Transmission (RIT).

Mit Hilfe des erfindungsgemäßen Verfahrens wird eine transparente polykristalline Keramik hergestellt, die quasi keine Glasphase (<0,1%) und eine Dichte von > 99,5 bzw. weiter verbessert ≥ 99,9% der theoretischen Dichte (TD) besitzt.

Als Werkstoffe zum Erreichen dieses Ziel können alle Werkstoffe dienen, die Härten von ≥ 12GPa besitzen und bei Korngrößen <1µm und einer Porosität ≤ 0,1% transparent werden. Bevorzugt sind hierbei Aluminiumoxid, Spinelle(MgAl₂O₄ etc.), AION oder Perowskite (z.B. YAlO₃) oder Granate (z.B. : Y₃Al₅O₁₂).

Voraussetzung dafür sind Ausgangsstoffe mit einer Reinheit von ≥99% und einer Ausgangskorngröße von ≤500nm, vorzugsweise ≤300nm.

Die Keramik soll vorzugsweise nahezu keine Porosität enthalten, d.h. die Porosität soll ≤0,1% betragen. Außerdem soll die Korngröße <0,8µm, vorzugsweise <0,6µm sein. Es sollen weniger als 5% der Körner >1µm sein.

Diese Kombination aus höchster Dichte und geringster Korngröße garantiert RIT-Werte von ≤40%.

Aus der Kombination der angegebenen Werte ergibt es sich, dass die erfindungsgemäß hergestellte Keramik über die Transluzenz hinaus transparent ist. Das ist der ganz wesentliche Unterschied zu den bislang bekannten transluzenten Keramiken, die über eine Pressformgebung - wie die EP 1 458 304 A1 offenbart - hergestellt wurden.

Die RIT wird mit rotem Licht der Wellenlänge 640 nm mittels eines Spektrophotometers integralbestimmt. RIT wird dabei derartig bestimmt, dass nur der Anteil durchgehenden Lichtes innerhalb eines Winkels von ≤0,6 DEG um die gerade Achse erfasst wird.

Die besonderen Eigenschaften der erfindungsgemäß hergestellten Keramik basieren im Wesentlichen auf dem erfindungsgemäßen, auf die Submikronkeramik abgestimmten Herstellungsverfahren. Basis des erfindungsgemäßen Herstellungsverfahren stellt axiales Trockenpressen sowie isostatisches Pressen oder eine Kombination aus diesen beiden Preßtechnologien dar. Das so hergestellte Keramikmaterial kann, muss jedoch nicht weiter geformt werden.

Die Herstellung der erfindungsgemäßen Keramik läuft über die Herstellung eines Granulates, das auf verschiedenste Weisen hergestellt werden kann. Bspw. kann eine Sprühgranulation, eine Wirbelschichtgranulation oder ein Partikelcoating erfolgen. Das dafür verwendete Ausgangspulver soll Primärkorngrößen <500nm, besonders bevorzugt ≤300nm aufweisen. Nur so können Korngrößen <600nm realisiert werden.

Um das Material in eine pressfähige Form zu überführen, kann es mit Presshilfsmitteln und/oder Binder und/oder Gleitmittel versetzt werden. Dieses Material wird dann in die gewünschte Form gepresst. Das so geformte Bauteil besitzt bspw. eine Höhe ≤10mm und ist in Flächenabmessungen von 30 bis 1000mm Kantenlänge herstellbar. Die Herstellung der gewünschten Form erfolgt über die Presstechnologie zu einer Gründichte von ≥40%TD.

Die letzte Pressformgebung wird hierbei derartig durchgeführt, dass der maximale Pressdruck, oder ein Pressdruck darunter, mehrfach angefahren wird, so dass höhere Gründichten ermöglicht werden als normal bei einer konventioneller Pressung erreichbar sind. Erfindungsgemäß sind Gründichten möglich, die min. 2%, vorzugsweise 5%, oder weiter bevorzugt 8% größer sind als Gründichten, wie sie bei konventionellem Pressen mit einmaligem Anfahren des Maximaldrucks möglich sind. Als letzte Prozessstufe kann ein uniaxiales oder ein isostatisches Pressen dienen.

Das Material wird dann bei der niedrig möglichsten Sintertemperatur vorgesintert oder nur geschrüht (- bspw. bis 700°C ohne oder mit einer Haltezeit von 1 bis 3 Stunden). Anschließend kann ein Sinterhip-Vorgang erfolgen, der in verschiedenen Sinteratmosphären, wie Argon oder Luft, oder im Vakuum durchgeführt wird. Alternativ kann das Bauteil auch konventionell vorgesintert und anschließend gehippt werden. Sintertemperatur und Hip-Temperatur richten sich nach dem zur Anwendung gelangenden Rohstoff und der Anzahl der verwendeten Preßzyklen.

Anschließend erfolgt ein Hip- oder auch ein Nachhipprozess.

Um die gewünschte Transparenz zu erzielen, ist im Falle des Vorsinterns ein Nachhippen notwendig; im Falle des Sinterhippens erfolgt die gesamte Sinterung im Hip-Ofen. Beim Sinterhippen kann die Dichtsintertemperatur im Vergleich zur Dichtsintertemperatur zum Vorsintern durch geeignete Atmosphärenwahl weiter abgesenkt werden.

Das Hippen geschieht generell bei Temperaturen bis 100°C unterhalb der Sintertemperatur, bevorzugt unterhalb 1240°C, um in einer Kohlenstofffreien, nichtreduzierenden Atmosphäre Hippen zu können. Es sind auch Hip-Temperaturen bis 100°C oberhalb der Sintertemperatur möglich, sie werden jedoch weniger bevorzugt.

Der verwendete Druck beträgt 100 bis 200 MPa, bevorzugt ≥ 210MPa aber ≤ 350MPa. Als Druckgas können Argon, Luft, oder andere Gase dienen. Luft erlaubt eine beschleunigte Sinterung und verhindert Reduktionserscheinungen und somit eine weitere Absenkung der Hip-Temperatur. Luft wird deshalb besonders bevorzugt.

Die Dichte nach dem Hip-Prozess beträgt ≥ 99,8% TD.

Erfindungsgemäß kommen bspw. die folgenden Test-Methoden zur Anwendung:
Härte: Die Härte wurde analog zu DIN V ENV 843-4 bestimmt.. Als Last dienten 10kg. Die Eindringzeit beträgt 5 sec. Die dargestellten Härtewerte sind Mittelwert aus zehn Messungen.

Dichte: Die Dichte wurde analog zu DIN EN 623-2 nach der Archimedesmethode bestimmt. Als Theoretische Dichte für AL₂O₃ wurden 3,987g/cm³ angenommen. Für andere Werkstoffe gelten andere Theoretische Dichten (Spinell z.B. 3,578 g/cm³).

RIT: Die für die Durchsichtigkeit, d.h. Transparenz von Materialien verantwortliche Größe ist die zwecks Ausschluss von Streulicht aus der erfassten Intensität nur mit sehr engem Aperturwinkel von ca. 0,5 DEG zu messende "wahre" (real) In-Line-Transmission (RIT).

Rohstoffcharakterisierung: Die Charakterisierung der Rohstoffe erfolgt bspw. durch den Rohstofflieferanten.

Korngröße: Die Korngröße ist ermittelt worden, indem die Flächen der einzelnen Kristalle, die nach thermischem Ätzen unter dem SEM sichtbar waren, zu äquivalenten Kreisdurchmessern umgerechnet wurden. Die so ermittelten Korngrößen wurden mittels Korrekturfaktor auf "Wahre Korngrößen" umgerechnet, die den in der Literatur angegebenen Werten entsprechen. Der Korrekturfaktor entspricht dem Faktor von 1,56 der für die "average intercept length" Methode verwendet wird.

Nachfolgend wird die Erfindung anhand von Ausführungsbeispielen weiter erläutert.

### Beispiel1:

Es wurde Aluminiumoxidgranulat (TM-DS-90M) der Firma Taimeh bezogen und bei 260 MPa 32-fach zyklisch verpresst. Daraus resultierte eine Gründichte von 59,5%TD (TD bei 260MPa konventionell = 56%) und somit ein schmaleres Kornband mit einer kleineren maximalen Porengröße. Daraus resultierte eine deutlich verringerte Sintertemperatur. Bei einer Temperatur von 1190°C und 2 Stunden Haltezeit ergab sich eine Sinterdichte von 96%. Diese Probe wurde bei 1170°C und 2 Stunden Haltezeit in einer Kanthal-Hippe in Luftatmosphäre bei 300MPa nachgehippt. Die Abkühlung erfolgte ungeregelt.

Danach stellte sich eine Dichte von >3,98 g/cm³ ein, welches >99,9% der Theoretischen Dichte entspricht.

Die Korngröße lag bei etwa 500nm.

Aus der Kombination von höchster Dichte und geringstem Kornwachstum ergab sich ein RIT-Wert von 41%.

### Beispiel2:

Das verpresste Material aus Beispiel 1 wurde bei 650°C 2 Stunden geschrüht und anschließen in der Kanthal-Hippe aus Beispiel1 sintergehippt. Beim Hip-Prozess wurde bis 1240°C mit 20K/Min aufgeheizt, anschließend erfolgte eine kurze Haltezeit von 10 Minuten. Diese erste Stufe erfolgte in Vakuum. Nach Ablauf der Haltezeit wurde auf 1180°C abgekühlt und ein Luftdruck von 300MPa aufgebracht. Bei 1180°C erfolgte eine isothermische Haltezeit von 2 Stunden.

Die Abkühlung erfolgte ungeregelt.

Danach stellte sich eine Dichte von ca. 3,99 g/cm³ ein, welches im Rahmen der Messgenauigkeit der Theoretischen Dichte entspricht. Die Abkühlung erfolgte ungeregelt.

Die Korngröße lag bei etwa 450nm. Aus der Kombination von höchster Dichte und geringstem Kornwachstum ergab sich ein RIT-Wert von 50%.

### Beispiel3:

Der Vorgang entsprach dem des Beispiel 1 mit dem Unterschied, dass isostatisch verpresst wurde, die Zyklenanzahl blieb gleich. Die sich einstellende Gründichte lag mit 59% etwas unterhalb der des uniaxialen zyklischen Pressens. Sintern und Hippen verlief analog Beispiel 1.

Danach stellte sich eine Dichte von >3,98 g/cm³ ein, welches >99,9% der Theoretischen Dichte entspricht.

Die Korngröße lag bei etwa 500nm. Aus der Kombination von höchster Dichte und geringstem Kornwachstum ergab sich ein RIT-Wert von 45%.

## Patentansprüche

1. Verfahren zur Herstellung einer polykristallinen transparenten Keramik, die für Licht einer Wellenlänge zwischen 600 und 650 nm eine wahre In-Line Transmission (RIT) von > 40% des theoretischen Maximalwertes aufweist, **dadurch gekennzeichnet, dass** aus einem Ausgangspulver das eine Primärkorngröße von < 500 nm, vorzugsweise ≤ 300 nm, aufweist, durch Sprühgranulation oder durch Wirbelgranulation oder durch Partikelcoating ein Keramikgranulat mit einer Primärkorngrösse von ≤ 500 nm hergestellt wird, dass das Keramikgranulat mit Presshilfsmittel und/oder Binder und/oder Gleitmittel versetzt wird und durch zyklisches Pressen auf eine Gründichte von ≥ 40% der theoretischen Dichte (TD) verdichtet wird, wobei das zyklische Pressen uniaxiales Pressen oder eine Kombination aus uniaxialem Pressen und isostatischem Pressen umfasst, und dass anschließend entweder eine Vorsinterung und ein Sinterhippen oder ein konventionelles Sintern bis zum Auftreten einer geschlossenen Porosität und ein Nachhippen des zyklisch gepressten Grünkörpers erfolgt, so dass die hergestellte transparente Keramik eine Dichte von ≥ 99,8% TD besitzt.

2. Verfahren nach Anspruch 1, **dadurch gekennzeichnet, dass** der letzte Pressverfahrensschritt des zyklischen Pressens bei dem maximalen Pressdruck erfolgt, oder bei einem Pressdruck unterhalb des maximalen Pressdrucks mehrfach durchgeführt wird.

3. Verfahren nach Anspruch 2, **dadurch gekennzeichnet, dass** der letzte Pressverfahrensschritt durch isostatisches Pressen oder durch uniaxiales Pressen erfolgt.

4. Verfahren nach Anspruch 1, **dadurch gekennzeichnet, dass** die Vorsinterung bei der niedrigst möglichen Sintertemperatur oder durch Schrühen erfolgt.

5. Verfahren nach Anspruch 4, **dadurch gekennzeichnet, dass** das Schrühen bei einer Temperatur um 700°C ohne oder mit einer Haltezeit von 1 bis 3 Stunden erfolgt.

6. Verfahren nach Anspruch 1, **dadurch gekennzeichnet, dass** das Sinterhippen in einer Sinteratmosphäre wie Argon oder Luft oder im Vakuum erfolgt.

7. Verfahren nach Anspruch 1, **dadurch gekennzeichnet, dass** das Hippen bei einem Druck von ≥ 100 MPa, vorzugsweise zwischen ≥ 200 MPa und ≤ 350 MPa erfolgt.

8. Verfahren nach einem der Ansprüche 1 bis 7, **dadurch gekennzeichnet, dass** die transparente Keramik oberflächlich poliert wird.

9. Verfahren nach einem der Ansprüche 1 bis 8, **dadurch gekennzeichnet, dass** das Nachhippen oder das Sinterhippen in einer mit Kohlenstoff bekleideten Hippe oder vorzugsweise in einer mit Molybdän- oder Kanthal-bekleideten Hippe erfolgt.

10. Verfahren nach einem der Ansprüche 1 bis 9, **dadurch gekennzeichnet, dass** das Nachhippen oder das Sinterhippen in einer Argon-Atmosphäre oder vorzugsweise in einer Luftatmosphäre erfolgt.

## Claims

1. A method for producing a polycrystalline transparent ceramic material that has, for light of a wavelength between 600 and 650 nm, a real in-line transmission (RIT) of > 40% of the theoretical maximum value, **characterised in that** a ceramic granulated material having a primary grain size of ≤500 nm is produced from a starting powder, which has a primary grain size of < 500 nm, preferably ≤ 300 nm, by means of spray granulation or by means of fluidized-bed granulation or by means of particle coating, **in that** the ceramic granulated material is mixed with a pressing aid and/or binder and/or lubricant and is compacted by means of cyclical pressing to a green density of ≥ 40% of the theoretical density (TD), wherein the cyclical pressing includes uniaxial pressing or a combination of uniaxial pressing and isostatic pressing, and **in that** subsequently there follows either pre-sintering and sintering high-temperature isostatic pressing (HIP) or conventional sintering until a closed porosity occurs and subsequent HIP of the cyclically pressed green body so that the transparent ceramic material that is produced has a density of ≥ 99.8% TD.

2. A method according to claim 1, **characterised in that** the last pressing method step of cyclical pressing is effected at the maximum pressing pressure or in the case of a pressing pressure below the maximum pressing pressure is carried out repeatedly.

3. A method according to claim 2, **characterised in that** the last pressing method step is effected by means of isostatic pressing or by means of uniaxial pressing.

4. A method according to claim 1, **characterised in that** the pre-sintering is effected at the lowest possible sintering temperature or by means of bisque firing.

5. A method according to claim 4, **characterised in that** the bisque firing is effected at a temperature around 700°C without or with a holding time of 1 to 3 hours.

6. A method according to claim 1, **characterised in that** the sintering HIP is effected in a sintering atmosphere such as argon or air or under vacuum.

7. A method according to claim 1, **characterised in that** the HIP is effected at a pressure of ≥ 100 MPa, preferably between ≥ 200 MPa and ≤ 350 MPa.

8. A method according to one of claims 1 to 7, **characterised in that** the transparent ceramic material is polished on the surface.

9. A method according to one of claims 1 to 8, **characterised in that** the subsequent HIP or the sintering HIP is effected in HIP equipment lined with carbon or preferably in HIP equipment lined with molybdenum or Kanthal.

10. A method according to one of claims 1 to 9, **characterised in that** the subsequent HIP or the sintering HIP is effected in an argon atmosphere or preferably in an air atmosphere.

## Revendications

1. Procédé de fabrication d'une céramique transparente poly-cristalline qui, pour une lumière d'une longueur d'onde comprise entre 600 et 650 nm, présente une transmission en ligne réelle (RIT) de > 40 % de la valeur maximale théorique, **caractérisé en ce que** l'on fabrique, à partir d'une poudre de départ présentant une grosseur de grain primaire de < 500 nm, de préférence ≤ 300 nm, par granulation par pulvérisation ou par granulation par tourbillonnement ou par revêtement aux particules, des granulés de céramique avec une grosseur de grain primaire ≤ 500 nm, **en ce que** les granulés de céramique sont mélangés avec un auxiliaire de compression et/ou un liant et/ou un lubrifiant et sont comprimés par compression cyclique jusqu'à une densité à vert de ≥ 40 % de la densité théorique (TD), la compression cyclique comportant une compression uniaxiale ou une combinaison d'une compression uniaxiale et d'une compression isostatique, et **en ce qu'**ensuite on effectue soit un préfrittage et un frittage avec compression isostatique à température élevée, soit un frittage conventionnel, jusqu'à apparition d'une porosité fermée, et une compression isostatique à chaud ultérieure du corps vert comprimé de façon cyclique, de sorte que la céramique transparente fabriquée possède une densité de ≥ 99,8 % TD.

2. Procédé selon la revendication 1, **caractérisé en ce que** la dernière étape de procédé de compression de la compression cyclique s'effectue à la pression de compression maximale ou est effectuée plusieurs fois à une pression de compression inférieure à la pression de compression maximale.

3. Procédé selon la revendication 2, **caractérisé en ce que** la dernière étape de procédé de compression de la compression cyclique est effectuée par compression isostatique ou par compression uniaxiale.

4. Procédé selon la revendication 1, **caractérisé en ce que** le préfrittage est effectué à la température de frittage la plus basse possible ou par cuisson de biscuit.

5. Procédé selon la revendication 4, **caractérisé en ce que** la cuisson de biscuit est effectuée à une température d'environ 700 °C, sans ou avec un temps de maintien de 1 à 3 heures.

6. Procédé selon la revendication 1, **caractérisé en ce que** le frittage avec compression isostatique à chaud est effectué dans une atmosphère telle que l'argon ou l'air ou sous vide.

7. Procédé selon la revendication 1, **caractérisé en ce que** la compression isostatique à chaud est effectuée sous une pression de > 100 MPa, de préférence entre ≥ 200 MPa et ≤ 350 MPa.

8. Procédé selon l'une des revendications 1 à 7, **caractérisé en ce que** la céramique transparente est polie en surface.

9. Procédé selon l'une des revendications 1 à 8, **caractérisé en ce que** la compression isostatique à chaud ultérieure ou le frittage avec compression isostatique à chaud est effectué dans une presse isostatique à chaud revêtue de carbone ou, de préférence, dans une presse isostatique à chaud revêtue de molybdène ou de Kanthal.

10. Procédé selon l'une des revendications 1 à 9, **caractérisé en ce que** la compression isostatique à chaud ultérieure ou le frittage avec compression isostatique à chaud est effectué sous atmosphère d'argon ou, de préférence, sous atmosphère d'air.
